# EUROPEAN PATENT APPLICATION

(11) **EP 2 454 935 A2**
(43) Date of publication of application: **23.05.2012**
(21) Application number: 11396009.0
(22) Date of filing: 15.11.2011
(51) Int. Cl.: A01G 23/083

(54) **Harvester head**

(30) Priority: 17.11.2010 FI 20106211
(71) Applicant: Outokummun Metalli Oy, 83501 Outokumpu (FI)
(72) Inventor: Neuvonen, Timo, 58500 Punkaharju (FI)
(74) Representative: Pitkänen, Hannu Alpo Antero

(57) **Abstract**

The invention relates to a harvester head used for processing trees and to a fastening of feed elements (4, 5) in the harvester head including a mechanism (1-3) moving the feed element (4, 5). According to the invention, the mechanism moving the feed element includes one or more operating levers (1), one or more hydraulic cylinders (2) and one or more supporting arms (3), and the operating levers (1) are pivotedly fastened to the feed element such that fastening joints (7) in the feed-element body (4) are located below the top side of the feed element.

## Description

The invention relates to a harvester head used for processing trees and particularly to a fastening of feed elements in the harvester head including a mechanism moving the feed element.

Trees are cut down and delimbed in forests by forest machines, such as so-called harvesters. A harvester head of these harvesters includes devices related to the handling and processing of trees, such as a tree cutting device, delimbing devices and cutting blades as well as other devices required for cutting down, barking and delimbing trees and cutting them into cut-to-size timber. Furthermore, the harvester head includes feed elements, by means of which, trees are transferred in the different steps of processing in the harvester head. These feed elements are usually fastened to the body structure by various arm and joint mechanisms, which are fastened to the top surface of the feed element. A problem of recent fastenings is that implementing a large movement range is difficult such that the angle of the feed element remains advantageous in relation to trees being fed without a very massive structure.

An object of the invention is to introduce a fastening of feed elements in a harvester head by means of which the problems related to recent fastenings are eliminated. A particular object of the invention is to introduce a feed-element fastening, when using which, the angle of the feed element remains advantageous in relation to trees being fed. A further object of the invention is to introduce a feed-element fastening which enables the small size of the harvester head and the large maximum opening of the feed element.

The object of the invention is achieved with a fastening of a feed element in a harvester head, which is characterised by what is presented in the claims.

In the fastening according to the invention, a mechanism moving the feed element includes one or more operating levers, one or more hydraulic cylinders and one or more supporting arms. The operating lever or operating levers are pivotedly fastened to the feed element such that fastening joints in the body of the feed element are located below the top side of the feed element. The top side of the feed element refers to the side of the feed element on the side of the harvester-head body. Then, a relatively light mechanism provides the feed element moving extensively in an advantageous position in relation to trees being fed. The device is small-sized but produces a large maximum opening with respect to the device size, which facilitates gripping large tree bundles in bulk handling. In the maximum opening, feed rollers do not impede gripping felled trees nor their loading.

According to the invention, supporting arms are advantageously pivotedly fastened to the feed element such that the fastening joints of the supporting arms in the body of the feed element are located below the top side of the feed element. This arrangement also provides a large maximum opening.

In a next advantageous embodiment of the invention, the fastening joints of operating levers in the body of the feed element and the fastening joints of the supporting arms in the body of the feed element are located below the feed element.

Other advantageous embodiments of the invention are presented in the other dependent claims.

The invention will now be described in more detail with reference to the accompanying drawing in which
Fig. 1 shows an oblique side view of a feed device having a fastening according to the invention,
Fig. 2 shows the feed device according to Fig. 1 in another position and
Fig. 3 shows an oblique top view of a harvester head having the feed device according to Fig. 1.

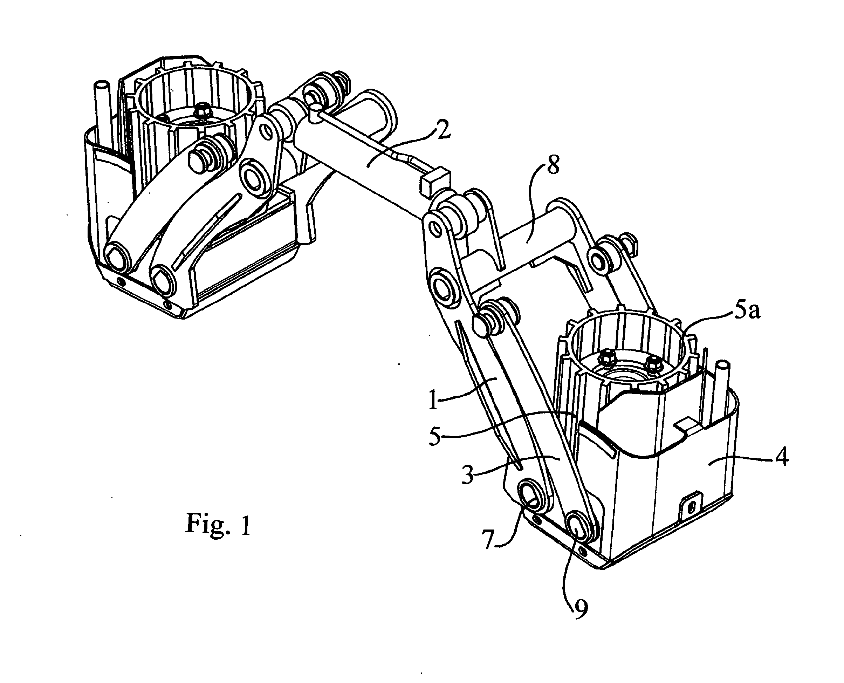

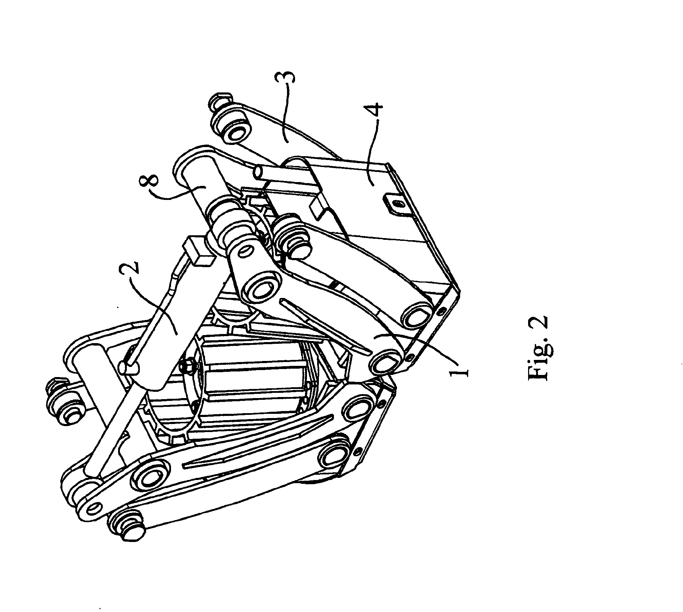

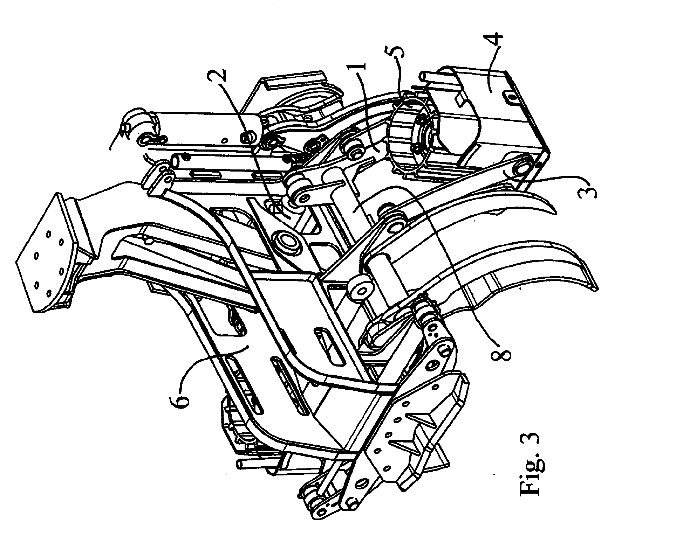

In the embodiment of Figs. 1 and 2, the feed device includes the following parts: operating levers 1, a hydraulic cylinder 2, supporting arms 3, a feed element, which pertains feed-roller bodies 4, feed rollers 5 and feed motors (not shown in the figures) located in the bodies for rotating the feed rollers. According to Fig. 3, the feed device is fastened to a body 6 of the harvester head such that one side of the body includes one feed roller and the other side includes at the opposite point another feed roller. In some embodiments, the harvester head can include more than one feed device.

The hydraulic cylinder 2 is fastened at the ends of the operating levers 1 on different sides of the harvester-head body, that is, the end of the cylinder rod is fastened to the operating lever on one side and the end of the cylinder body is fastened to the operating lever on the opposite side. The operating levers 1 are pivotedly fastened via fastening joints 7 to the feed-roller body 4. The operating levers include two levers on different sides of the feed body and their ends on the cylinder side are connected by a cross bar 8, which is rotatably connected to the cylinder end. The supporting arms 3 are on both sides of the feed body and they are fastened from their one ends pivotedly via a fastening joint 9 to the feed body and from their other ends to the harvester-head body. The fastening joints 7, 9 of the operating lever 1 and the supporting arm 3 in the feed-roller body 4 are located below the top side of the feed roller and, in more detail, in this embodiment below the feed roller. In this context, the top side of the feed roller i.e. feed element refers to the top side of the feed roller 5 on the side of the harvester-head body shown in Fig. 1, designated by reference number 5a. The feed-roller body extends in this embodiment below the feed roller and the fastening joints are in the lower part of the body, that is, the fastening is below the feed roller.

Fig. 3 shows the fastening of the feed device to the harvester-head body 6. The operating levers 1 and the supporting arms 3 are fastened to the harvester-head body 6 by a joint in the travel direction of trees. The harvester head is fastened to a work machine, which is not shown in the figures.

When the opening of the feed device i.e. the position of the feed rollers being on different sides of the harvester body in relation to each other is adjusted, the length of the cylinder 2 rod is changed, which moves the operating lever 1 and transfers the units formed by the feed roller 5, the feed-roller body 4 and the feed motor on both sides either closer to each other or farther from each other. By means of the supporting arms 3, these units remain at a desired angle in relation to the harvester-head body. Fig. 1 shows the feed device in its maximum opening position and Fig. 2 shows the feed device in its minimum opening position. A relatively short cylinder movement or stroke provides an extensive movement range. The feed roller remains all the time in its advantageous optimum position in relation to trees being fed. The device self-adjusts its position in accordance with the diameter of a tree or wood material being processed.

The other embodiments of the invention can employ other known feed mechanism arrangements. Instead of and/or in addition to the feed rollers, there can be e.g. feed drums or other known feed mechanisms. The number and shape of the operating levers and the supporting arms can also vary and be different in different embodiments. In some embodiments, the structure includes only one operating lever. In some embodiments, the structure includes only one supporting arm.

The invention can also be applied to other devices required in wood handling. Similarly, it is also possible to use some other known feed mechanism with the fastening mechanism of the feed elements, e.g. a feed drum located above the feed elements or a feed roller or rollers.

The invention is not limited to the described advantageous embodiments, but it can vary within the scope of the inventive idea presented in the claims.

## Claims

1. A harvester head used for processing trees and a fastening of a feed element (4, 5) in the harvester head including a mechanism (1-3) moving the feed element (4, 5), ***characterised* in that** the mechanism moving the feed element includes one or more operating levers (1), one or more hydraulic cylinders (2) and one or more supporting arms (3), and that the operating levers (1) are pivotedly fastened to the feed element such that fastening joints (7) of the operating levers in the feed-element body (4) are located below the top side of the feed element.

2. A fastening according to claim 1, ***characterised* in that** the supporting arms (3) are pivotedly fastened to the feed element such that fastening joints (9) of the supporting arms in the feed-element body (4) are located below the top side of the feed element.

3. A fastening according to claim 2, ***characterised* in that** the fastening joints (7) of the operating levers in the feed-element body (4) and the fastening joints (9) of the supporting arms in the feed-element body (4) are located below the feed element.

4. A fastening according to any one of claims 1-3, ***characterised* in that** the feed element includes feed-roller bodies (4) and feed rollers (5) fastened to it, and that the fastening is below the feed roller.

5. A fastening according to any one of claims 1-4, ***characterised* in that** the end of the cylinder (2) rod is fastened to the operating lever on one side of the feed element and the end of the cylinder body is fastened to the operating lever on the opposite side.

6. A fastening according to any one of claims 1-5, ***characterised* in that** the operating levers (1) include two levers on different sides of the feed-element body and a cross bar (8) connecting their ends on the side of the cylinder which is connected to the cylinder end rotatably.

7. A fastening according to any one of claims 1-6, ***characterised* in that** the supporting arms (3) are on both sides of the feed body and they are fastened from their one ends pivotedly via the fastening joint (9) to the feed body and from their other ends to the harvester-head body.
